**Europäisches Patentamt**

**European Patent Office**

**Office européen des brevets**

(19)

(11) Publication number : **0 064 579 B2**

# NEW EUROPEAN PATENT SPECIFICATION

(12)

(45) Date of publication of the new patent specification : **23.12.92 Bulletin 92/52**

(51) Int. Cl.⁵ : **B65H 59/38, G05D 13/62**

(21) Application number : **81302055.9**

(22) Date of filing : **08.05.81**

(54) **Yarn winding apparatus.**

(43) Date of publication of application :
**17.11.82 Bulletin 82/46**

(45) Publication of the grant of the patent :
**27.07.88 Bulletin 88/30**

(45) Mention of the opposition decision :
**23.12.92 Bulletin 92/52**

(84) Designated Contracting States :
**CH DE FR GB IT LI**

(56) References cited :
**CH-A- 466 107
DE-A- 2 035 543
FR-A- 2 054 754
GB-A- 2 015 589
JP-A- 5 065 628
JP-A-54 093 142
JP-A-54 112 236
US-A- 3 351 831
US-A- 3 638 873
US-A- 3 931 938**

(73) Proprietor : **TORAY INDUSTRIES, INC.
2, Nihonbashi-Muromachi 2-chome Chuo-ku
Tokyo 103 (JP)**

(72) Inventor : **Hasegawa, Katsumi
1077-33, Minamigasa-cho
Kusatsu-shi Shiga-ken (JP)**
Inventor : **Kawabata, Takahiro
A4-14, 10, Sonoyama 2-chome
Otsu-shi Shiga-ken (JP)**
Inventor : **Kuge, Shintaro
A4-25, 10, Sonoyama 2-chome
Otsu-shi Shiga-ken (JP)**

(74) Representative : **Coxon, Philip et al
Eric Potter & Clarkson St. Mary's Court St.
Mary's Gate
Nottingham NG1 1LE (GB)**

EP 0 064 579 B2

Jouve, 18, rue Saint-Denis, 75001 PARIS

## Description

Background of the invention

The present invention relates to a yarn winding apparatus, and more specifically, it relates to a yarn winding apparatus wherein a yarn is wound on a bobbin tube at a constant wind ratio.

Winding a yarn at a constant wind ratio has a remarkable feature in that such winding can easily prevent ribbon-winding from occurring. Therefore, a yarn package wound at a constant wind ratio can be very smoothly unwound at high speed. Recently, such a yarn package is required especially with the development of water or air jet looms in which looms a weft yarn will be unwound from a supply yarn package at a high speed such as at about 1,200 m/min.

In a conventional yarn winding apparatus which winds a yarn at a constant wind ratio, a winding spindle for mounting a bobbin is driven by a motor. The driving power for a traverse means is transmitted from the winding spindle by means of a timing-belt or gears, and whereby the wind ratio is kept constant. However such a conventional yarn winding apparatus with a constant wind ratio has several problems as follows.

According to the conventional winding apparatus, it is difficult to wind a yarn at high speed, e.g. at several thousand meters per minute, because of the mechanical transmission of the driving power from a winding spindle to a traverse means. If the winding is carried out at a high speed, a problem in lubrication of a gear device will arise and slipping between belt and pulley which is caused by the difference in rotational speeds of a winding spindle and a traverse means, will take place. In addition, the noise will be increased excessively.

Another problem of the conventional winding apparatus is the difficulty in changing the wind ratio. The wind ratio should be changed in accordance with various conditions such as kinds of yarn material, denier of the yarn, quality of the yarn, the size of the yarn package to be formed and the like. However, according to the mechanical transmission in a conventional apparatus, changing the wind ratio is very troublesome.

Further problems of the conventional winding apparatus were encountered in the space necessary for the winding apparatus and the cost of the installation. In a conventional winding apparatus having a plurality of winding units, each winding unit comprises, as a unit, a yarn tension sensor, a speed changing means for controlling a motor of a winding spindle based on a signal issued from the yarn tension sensor, and a gear device for transmitting the driving power from the winding spindle to a traverse means. As a result, a conventional winding apparatus requires considerable large space and a high cost for installation.

Brief summary of the invention

An object of the present invention is to provide a yarn winding apparatus which eliminates the problems of the conventional techniques and permits changing the wind ratio to several predetermined values, step by step, during the winding.

A further object of the present invention is to provide a revolving type winder having two winding spindles and one traverse means, which permits winding a yarn at a constant wind ratio.

A still further object of the present invention is to provide a yarn winding apparatus having a plurality of winding devices, each of which devices comprises a winding spindle and a traverse means, wherein all winding devices are electrically and simultaneously controlled so as to keep a constant wind ratio.

To achieve the above-mentioned object, the apparatus of the present invention has following construction.

A yarn winding apparatus characterised as claimed in claim 1.

Yarn winding apparatus according to the precharacterised statement is known from Japanese Patent Application No. JP-A-50-65628. Motor speed control apparatus for maintaining two motors at the same rotational speed is known from U.S. Patent No. 3,351,831.

Other features and advantages of the present invention will be apparent from the following description given in connection with the accompanying drawings.

Fig. 1 is a schematic front view showing one embodiment of a yarn winding apparatus of the present invention;

Fig. 2 is a schematic side view of the yarn winding apparatus shown in Fig. 1, taken on a line A-A.

Fig. 3 is a block diagram of a wind ratio controlling means illustrated in Fig. 1.

Fig. 4 is a time chart of signals in a means for comparing signal generated by the rotation of a winding spindle.

Fig. 5 is a block diagram of another embodiment of the wind ratio controlling means.

Fig. 6 is a time chart of signals in a multiplying and dividing unit.

Fig. 7 is a graph showing the relationship between a half value of the cross angle of a yarn on a yarn package and the diameter of the yarn package.

Fig. 8 is a block diagram illustrating a further embodiment of the wind ratio controlling means.

Fig. 9 is a time chart of signals in the wind ratio controlling means illustrated in Fig. 8.

Fig. 10 is a schematic side view of an embodiment of a revolving type yarn winding apparatus of the present invention.

Fig. 11 is a schematic front view of a revolving type winder of the present invention.

Fig. 12 is a schematic front view of the winder illustrated in Fig. 1, which shows a condition of the winder after a bobbin-change.

Fig. 13 is a schematic front view of another revolving type winder of the present invention.

Figs. 14 and 15 are schematic front views of the winder illustrated in Fig. 13, which respectively show different conditions of the winder.

Fig. 16 is a schematic front view of an embodiment of a yarn winding apparatus of the present invention, which apparatus has a plurality of winding devices.

Fig. 17 is a block diagram of an embodiment of means for producing a tension representing signal illustrated in Fig. 16.

Fig. 18 is a block diagram of another embodiment of means for producing a tension representing signal illustrated in Fig. 16.

Fig. 19 is a schematic front view of another embodiment of a yarn winding apparatus of the present invention, which apparatus has a plurality of winding devices.

Fig. 20 is a plan view of a winding device illustrated in Fig. 19.

Fig. 21 is a side view of a winding device illustrated in Fig. 20.

Detailed description of preferred embodiments

Details of the embodiments of the present invention will be described with reference to the drawings. It is to be understood, however, that the present invention is not confined to these embodiments.

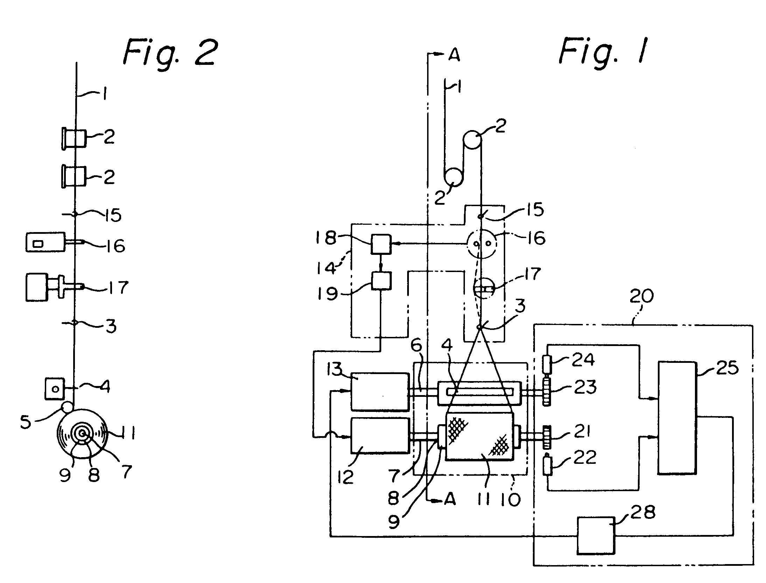

As shown in Figs. 1 and 2, a yarn 1 is supplied at a constant speed by means of feed rollers 2 such as godet rollers. The yarn 1 is, for example, a yarn which is spun from a spinnerette and then is drawn at a given draw ratio after oil treatment. The supplied yarn 1 is passed through a fixed guide 3 acting as the fulcrum or pivot point of the traverse motion of the yarn 1. The yarn 1 passed through a fixed guide 3 is wound into a package 11 by a winding device 10. The winding device 10 comrpises a traverse means and a winding spindle 7 for mounting a bobbin tube 9. The traverse means includes a traverse element 4 for imparting a traverse motion to a yarn 1, a touch roller 5 for contacting with a surface of a yarn package 11 and a shaft 6 for driving the traverse element 4. The winding spindle has a bobbin supporter 8 which supports the bobbin tube 9.

The winding spindle 7 is connected to a first motor 12 and is rotated by the rotation of the output shaft of the motor 12. The traverse element driving shaft is connected with a second motor 13 and is rotated by the rotation of the output shaft of the second motor 13. When the traverse element driving shaft 6 is driven by the second motor 13, the traverse motion is imparted to a yarn to be wound.

The above-mentioned winding device and the driving motors are well-known in conventional winding apparatuses.

In order to keep a substantially constant winding speed from the beginning of the winding to the completion of the winding, it is necessary to control the rotational speed of the winding spindle in such a manner that the rotational speed of the spindle is gradually decreased in accordance with the increase of the diameter of a yarn package. For this purpose, means 14 for controlling the motor 12 for a winding spindle 7 is arranged upstream of the winding device 10. Fig. 1 shows one of the embodiments of such controlling means. The controlling means in Fig. 1 comprises a yarn guide 15 arranged upstream of the fixed guide 3, a yarn tension sensing means 16 disposed between said two guides 3 and 15 and for generating an electrical signal indicative of the tension in the yarn, and a rotary guide 17 which is rotated and periodically deflects the yarn 1 slightly from its straight yarn passage extending between two yarn guides 3 and 15. The controlling means further comprises a means 18 for comparing an electrical signal from the yarn tension sensing means 16 with a predetermined electrical signal and for generating an error compensation signal in accordance with the difference between both said signals and a speed changing means 19 for controlling the rotational speed of the first motor 12 for a winding spindle in accordance with said error compensation signal. The speed changing means 19 controls the first motor 12 in such a manner that the error compensation signal from the comparing means 18 will not be generated. The above-mentioned controlling means 14 is disclosed in detail in UK Patent Publication 2015589A.

Another type of controlling means is disclosed in United States Patent No. 3,931,938. According to the apparatus of the U.S. Patent No. 3,931,938 a yarn tension sensing means is disposed downstream of and near the fixed guide for acting as the fulcrum of the traverse motion. Means for comparing a detected signal from the sensing means with a predetermined signal and means for controlling a first motor are respectively similar

EP 0 064 579 B2

to these explained before in connection with the embodiment of Fig. 1.

Further, means for controlling the rotational speed of a motor for a winding spindle are also disclosed in Japanese Laid-Opened Patent Publications 93137/79, 93142/79, 112235/79 and 2577/80.

Now, we will explain means 20 for controlling the wind ratio at a constant value or predetermined values.

The winding spindle 7 is provided with a rotary disc 21 at one end of the spindle 7. The rotary disc 21 rotates together with the spindle 7. A pulse pickup 22 is disposed at a position in which the pulse pickup 22 faces the rotary disc 21. When the winding spindle 7 rotates for one revolution, a certain number (Zsp) of pulses are produced by the pulse pickup.

In one embodiment, the rotary disc 21 is a disc having a desired number of notches or projections. A pulse pickup 22 is a magnetic pickup transducer which contains an electrical coil having an alternating voltage generated across its terminals as a result of changes in magnetic flux in the magnetic circuit which is formed by the disc 21 and magnetic pickup 22. These flux changes are produced by the rotation of the notched disc 21.

According to another embodiment, there is provided a light source near a rotary disc 21 which has holes or notches or projections. A pulse pickup 22 is an element for detecting optical changes and generating a signal, similar to a photoconductive cell.

The traverse element driving shaft 6 is also provided with a rotary disc 23 at one end of the shaft. The rotary disc 23 rotates together with the driving shaft 6. A pulse pickup 24 is disposed against the rotary disc 23. When the traverse element driving shaft 6 rotates one turn, another given number ($Z_{TR}$) of pulses are produced from the pulse pickup 24. According to one embodiment, a rotary disc 23 is a disc having a desired number of notches and a pulse pickup 24 is a magnetic pickup transducer similar to the magnetic pickup transducer 22.

The number $Z_{SP}$ and $Z_{TR}$ are determined as follows.

The wind ratio is a number of yarn warps on the winding package during one complete cycle of the traverse. That is, when the winding spindle 7 rotates $R_{SP}$ number of revolutions during one complete cycle of the traverse ($R_{SP}$ can be any number or mixed number) and the driving shaft 6 rotates $R_{TR}$ number of revolutions during one complete cycle of the traverse, ($R_{TR}$ can be any number or mixed number) the wind ratio is a value of $R_{SP}/R_{TR}$. The numbers $Z_{SP}$ and $Z_{TR}$ are determined so as to equalize the value of $R_{SP} \times Z_{SP}$ to the value of $R_{TR} \times Z_{TR}$. Therefore, the discs 21 and 23 are designed so as to obtain required numbers of pulses $Z_{SP}$ and $Z_{TR}$ per one revolution.

Consequently, if the winding spindle 7 and the traverse element driving shaft are respectively rotated at constant rotational speeds with a desired wind ratio, the number of the produced pulses of the pulse pickup 22 per unit of time is equal to the number of the produced pulses of the pulse pickup 24 per unit of time.

However, the rotational speed of the winding spindle 7 is changed during the winding in order to keep a constant winding speed. As a result, the rotational speed of the traverse element driving shaft 6 should be changed in accordance with the change of the rotational speed of the winding speed in order to keep a desired constant wind ratio.

According to the present invention there is provided means for controlling the second motor 13 of the traverse element driving shaft 6. In the embodiment of Fig. 1, the controlling means for the second motor comprises a means 25 for comparing a first electrical signal from the pulse pickup 22 with a second electrical signal from the pulse pickup 24. The comparing means 25 generates a third electrical signal corresponding to the difference between the first and second electrical signals. The controlling means for the second motor further comprises a speed changing means 28. The speed changing means 28 is actuated by the third electrical signal from the comparing means 25 and controls the rotational speed of the second motor 13 in such a manner that the second electrical signal will not be generated from the comparing means 25, i.e. that the number of pulses from the pickup 24 becomes equal to the number of pulses from the pickup 22.

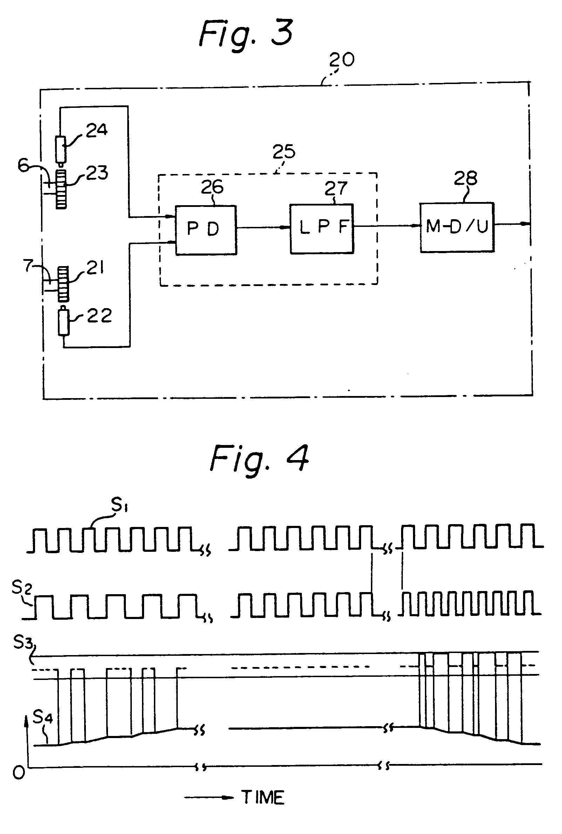

According to an embodiment illustrated in Fig. 3, a comparing means 25 comprises a phase comparator 26 and a low-pass filter 27. The phase comparator 26 detects the phase difference between two pulses signals $S_1$ and $S_2$ as illustrated in Fig. 4, from the pulse pickup 22 and 24, and generates pulse signal $S_3$ as illustrated in Fig. 4, which signal $S_3$ indicates the comparison result. The pulse signal $S_3$ has a pulse duration corresponding to the phase differences between the signal $S_1$ and $S_2$, and has negative and positive polarities with respect to a reference level. When the frequency $f_1$ of the signal $S_1$ is higher than that $f_2$ of the signal $S_2$, the signal $S_3$ has a negative polarity. When the frequency $f_1$ of the signal $S_1$ is lower than that $f_2$ of the signal $S_2$, the signal $S_3$ has a positive polarity (see Fig. 4).

The low-pass filter 27 integrates the output signal $S_3$ from the phase comparator with respect to time and generates a D.C. signal $S_4$ as illustrated in Fig. 4. The output signal $S_4$ from the low-pass filter 26 is applied to the speed changing means 28.

If the second motor 13 is an induction motor, the speed changing means 28 is an invertor which controls the frequency of the drive current of the induction motor 13 in accordance with input signal $S_4$.

4

If the second motor 13 is a D.C. motor, the speed changing means 28 is a D.C. motor controller which controls the field current of the D.C. motor in accordance with the input signal $S_4$.

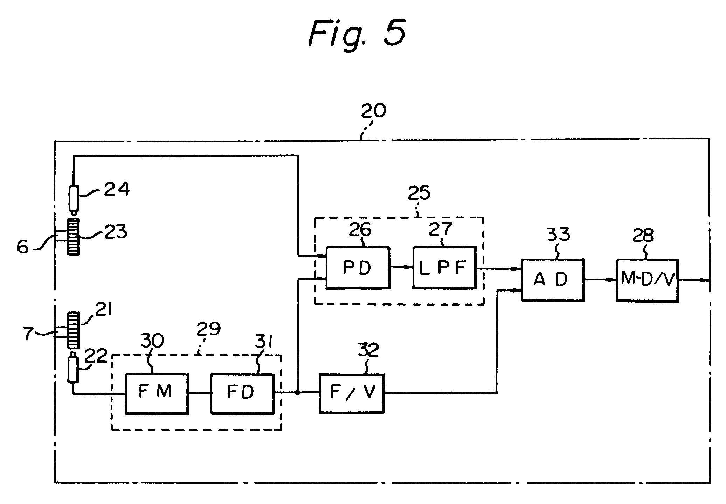

Fig. 5 shows another embodiment of means 20 for controlling the wind ratio at a constant value.

Members in Fig. 5 respectively correspond to the members in Fig. 1 designated by the same reference numerals.

According to the embodiment of Fig. 5, the controlling means 20 further comprises a frequency multiplying and dividing unit 29, a frequency/voltage converter 32 and an adder 33. The multiplying and dividing unit 29 comprises a frequency multiplier 30 which multiplies the number of the pulse signals from the pulse pickup 22 by the desired number of times, for example the numerical value of M, and the frequency divider 31 which divides the multiplied number of the pulse by the desired value, for example the numerical value of N. The output signal of the multiplying and dividing unit 29 is applied on one hand to the comparing means 25 and on the other hand to the frequency/voltage (F/V) converter 32. The output signals from the comparing means 25 and from the F/V converter are respectively applied to the adder 33. In the adder 33, the input signals are combined to give an output signal amplitude that is proportional to the sum of the input signal amplitudes. The output signal from the adder 33 is applied to the speed changing means 28.

The number of output pulses from the multiplying and dividing unit 29 during one complete cycle of the traverse is the value of $R_{SP} \times Z_{SP} \times M/N$, whereas the number of output pulses from the pickup 24 during one complete cycle of the traverse is the value of $R_{TR} \times Z_{TR}$. In this embodiment, the values of M and N are determined in such a way that the value of $R_{SP} \times Z_{SP} \times M/N$ is equal to the value of $R_{TR} \times Z_{TR}$. The value of M/N can be easily set and changed electrically. Therefore, according to the embodiment of Fig. 5, it is not necessary to limit the structure of the rotary discs 21 and 23 in view of the values $Z_{SP}$ and $Z_{TR}$. The values $Z_{SP}$ and $Z_{TR}$ can be selected appropriately.

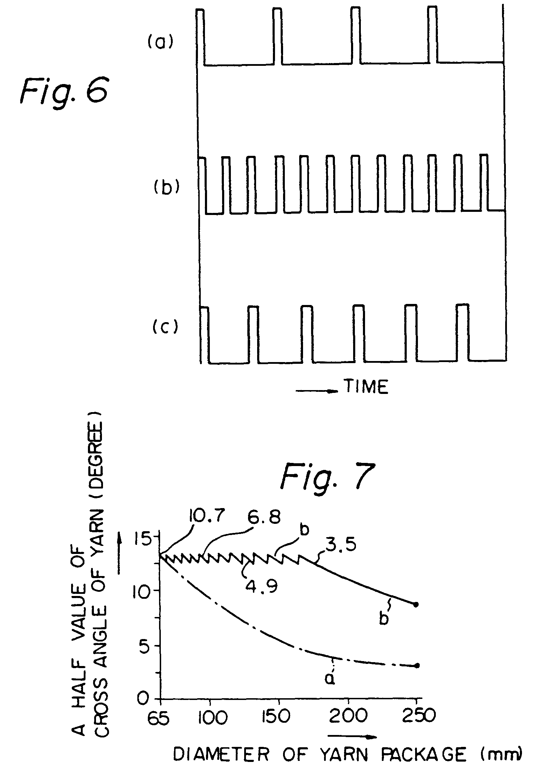

Fig. 6 is a diagram showing the relationship between the input and output signals in the multiplying and dividing unit 29. Fig. 6(a) shows the input pulse signals (P $H_z$) from the pickup 22. Fig. 6(b) shows pulse signals multiplied by three times ($3PH_z$). Fig. 6(c) shows the output pulse signals divided into half ($3/2$ P $H_z$).

The wind ratio can be easily changed by changing the multiplying value M and the dividing value N. Fig. 7 is a graph showing the relationship between a half value of the cross angle of yarn on a yarn package 11 and the diameter of the yarn package. A dot and dash curved line (a) shows the change of a half value of the cross angle when a wind ratio is kept at a constant value from the beginning of the winding to the completion of the winding. In this case the cross angle gradually decreases as the diameter of the yarn package increases. A solid saw-toothed line 32 shows the change of the cross angle when the wind ratio is changed step by step into predetermined values during the winding. Each of the wind ratios is substantially kept for a certain time duration. According to the solid line (b), setting of the wind ratio takes place fourteen times from a value of about 10.7 to a value of about 3.5.

In the case of a yarn of normal filaments having a relatively low elasticity, which filaments are not textured, it is possible to wind the yarn at a predetermined constant wind ratio from the beginning to the completion of the winding if the wind ratio is appropriately selected. The produced yarn package will have a good package-shape and the yarn will be smoothly unwound from the package. The selection of an appropriate wind ratio is based on experiments which were carried out with the wind ratios having several different values.

On the other hand, in the case of a yarn of filaments having a relatively high elasticity such as a textured yarn, if the cross angle of the yarn on a yarn package is reduced to a smaller angle than the angle of a certain degree during the winding, the produced yarn package has not a good yarn package shape, for example, both side faces of the yarn package will show bulges. Further, the yarn will not be smoothly unwound from such a yarn package and breakage of the yarn may occur.

Therefore, in order to wind a yarn having a relatively high elasticity, it is necessary to keep a cross angle of the yarn on a yarn package at least larger than a critical angle. For this purpose, the wind ratio is to be changed into several values during the winding. Preferably, as shown in Fig. 7, changing the wind ratio is carried out until the diameter of the yarn package reaches a certain size from the beginning of the winding, because a part having a small diameter in a produced yarn package is liable to get out of shape and as a result the yarn will not be smoothly unwound from such a part. Preferably, when changing the wind ratio, the difference between the preceding value of the wind ratio and the new value of the wind ratio should be small, whereby changes in the yarn tension will be small. Each wind ratio should be kept for a certain duration.

For an example, conditions will be explained when winding a false-twisted textured yarn of 150 denier, 48 filament of polyethylene terephthalate, on a bobbin tube having a diameter of 65 mm, into a yarn package with a 10 inch width and an angle formed by a side surface of the package and by the longitudinal axis of the package, of 13 degrees.

A helical angle of a yarn on a yarn package at the beginning of the winding, which helical angle corresponds to half of the cross angle of the yarn, was selected at an angle of 13 degrees. The wind ratio was a value of about 10.2.

In a case where the winding was carried out with the constant wind ratio of 10.2, both side surfaces of the yarn package bulged when the diameter of the package reached a range of between 100 mm and 160 mm. The produced yarn package had not a good package shape and the yarn was not able to be unwound smoothly at a high speed.

On the other hand, in case that the wind ratio was changed step by step until the diameter of the yarn package reached about 160 mm. The helical angle of the yarn on the package corresponding to a half value of the cross angle was kept within a range between about 13.5 degrees and about 12.5 degrees. For this purpose, values of the wind ratio were changed step by step thirteen times as the helical angle decreased.

Table 1 shows the relationship in an embodiment among values of the wind ratio (A), the diameter of a yarn package (Dmm), number (No) of steps for changing the wind ratio (A), thickness (t mm) of the wound layer in the package, the multiplying value of M, and the dividing value of N. The wind ratio was changed 30 times.

TABLE

| No | $t_{mm}$ | $D_{mm}$ | Wind ratio A | M | N |
|---|---|---|---|---|---|
| 1 | 1 | 65 | 10.1557 | 994 | 970 |
| 2 | 1.15 | 67 | 9.7705 | 977 | 991 |
| 3 | 1.30 | 69.3 | 9.4188 | 862 | 907 |
| 4 | 1.45 | 71.9 | 9.1557 | 837 | 906 |
| 5 | 1.60 | 74.8 | 8.6135 | 814 | 937 |
| 6 | 1.75 | 78 | 8.2295 | 749 | 902 |
| 7 | 1.9 | 81.5 | 7.7705 | 748 | 954 |
| 8 | 2.05 | 85.3 | 7.3863 | 714 | 958 |
| 9 | 2.2 | 89.4 | 7.1522 | 669 | 927 |
| 10 | 2.35 | 93.8 | 6.6140 | 634 | 950 |
| 11 | 2.5 | 98.5 | 6.3067 | 574 | 902 |
| 12 | 2.65 | 103.5 | 5.8474 | 544 | 922 |
| 13 | 2.8 | 108.8 | 5.5820 | 521 | 925 |
| 14 | 2.95 | 114.4 | 5.3088 | 533 | 995 |
| 15 | 3.1 | 120.3 | 5.1527 | 509 | 979 |
| 16 | 3.25 | 126.5 | 4.6934 | 466 | 984 |
| 17 | 3.4 | 133 | 4.4156 | 405 | 909 |
| 18 | 3.55 | 139.8 | 4.2298 | 414 | 970 |
| 19 | 3.7 | 146.9 | 4.1530 | 396 | 945 |

6

TABLE (continued)

| No | $t_{mm}$ | $D_{mm}$ | Wind ratio A | M | N |
|---|---|---|---|---|---|
| 20 | 3.85 | 154.3 | 3.7683 | 354 | 931 |
| 21 | 4 | 162 | 3.5842 | 332 | 918 |
| 22 | 4.15 | 170 | 3.3854 | 317 | 928 |
| 23 | 4.3 | 178.3 | 3.2136 | 298 | 919 |
| 24 | 4.45 | 186.9 | 3.1547 | 318 | 999 |
| 25 | 4.6 | 195.8 | 2.8469 | 266 | 926 |
| 26 | 4.75 | 205 | 2.7850 | 265 | 943 |
| 27 | 4.9 | 214.5 | 2.5825 | 240 | 921 |
| 28 | 5.05 | 224.3 | 2.4159 | 225 | 923 |
| 29 | 5.2 | 234.4 | 2.3853 | 239 | 993 |
| 30 | 5.35 | 244.8 | 2.2301 | 223 | 991 |

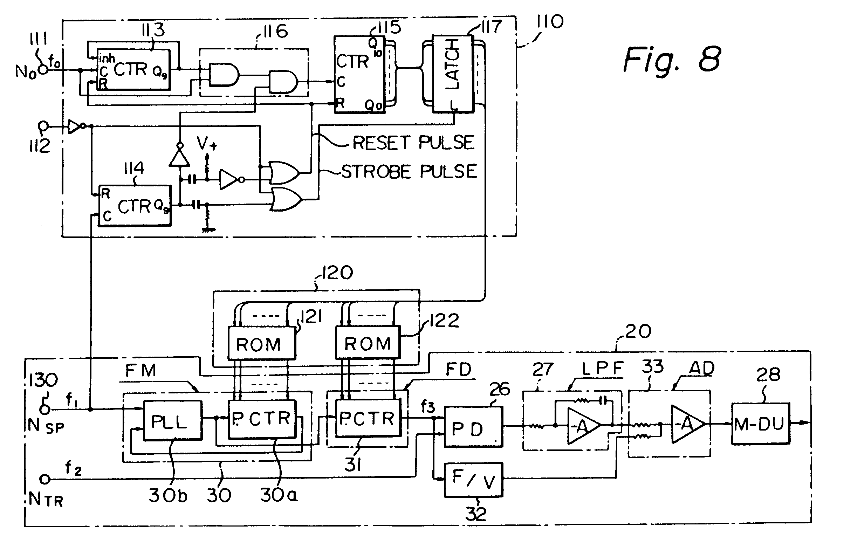

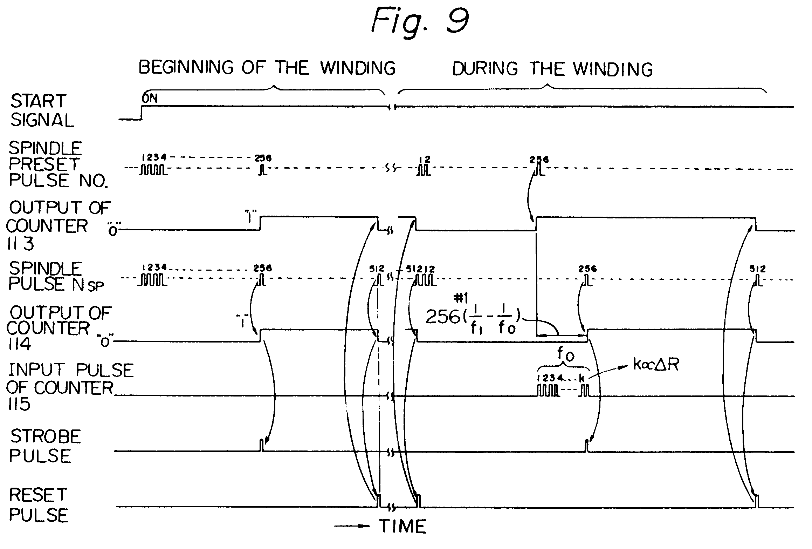

Now, according to Figs. 8 and 9, we will explain how to control the wind ratio which is changed into several values during the winding as shown with a line (b) in Fig. 7.

In Fig. 8, the wind ratio controlling means 20 is substantially similar to that illustrated in Fig. 5, except for the following points. That is, multiplying and dividing factors of the frequency multiplier 30 and the frequency divider 31 are programmable in this embodiment of Figs. 8 and 9. Therefore, we will not explain about each circuit element in detail here.

According to the embodiment of Figs. 8 and 9, additionally there are provided means 110 for detecting a diameter of a yarn package and a storage means 120 for storing various wind ratio data.

The package diameter detecting means 110 receives via an input terminal 111 a spindle preset pulse $N_0$ having a predetermined constant frequency $f_0$, which spindle preset pulse is generally used for pre-setting the rotational speed of a winding spindle before a yarn is threaded on a winding device. The package diameter detecting means 110 also receives via an input terminal 130 a spindle pulse $N_{SP}$ having a frequency $f_1$, which spindle pulse $N_{SP}$ is generated during the winding by the pulse pickup 22, corresponding to the rotational speed of the winding spindle 7. Further, the package diameter detecting means 110 receives a start signal via an input terminal 112. This start signal is generated when a yarn is threaded through a yarn tension sensing means 16 to a winding spindle which spindle has been rotated at a certain rotational speed in advance.

When the package diameter detecting means 110 receives the start signal, binary counters 113, 114 and 115 are reset. The binary counter 113 having a capacity of nine bits start to count the number of the spindle preset pulse $N_0$ applied thereto via the input terminal 111. When spindle preset pulses are applied to the counter 113, the output logical level of the counter 113 is changed from "0" to "1". Then the counter 113 stops its counting operation until a next reset pulse is applied thereto. The binary counter 114, also having a capacity of nine bits, starts to count the number of the spindle pulses $N_{SP}$ applied there to via the input terminal 130. When 256 spindle pulses are applied to the counter 114, the output logical level of the counter 114 is changed from "0" to "1". A gate circuit 116 allows the spindle preset pulse $N_0$ to pass through the gate circuit 116 only when the output level of the counter 113 is "1 " and the output level of the counter 114 is "0". The counter 115 counts the number of pulses passing through the gate circuit 116.

The contents in the counter 115 are applied to a latch circuit 117 and are temporarily stored therein when a strobe pulse is applied to the load terminal of the latch circuit 117. The strobe pulse is produced each time when the output level of the counter 114 is changed from "0" to "1". On the other hand, the contents in the counters 113 and 115 are cleared by a reset pulse which is generated each time the output level of the counter 114 is changed from "1" to "0".

The wind ratio storage means 120 comprises two read only memories (ROM) 121 and 122. Factor data in relation to multiplying factors M for the programmable frequency multiplier 30 are preliminarily stored in the ROM 121, whereas factor data in relation to dividing factors N for the programmable frequency divider 31 are preliminarily stored in the other ROM 122.

The stored contents of the latch circuit 117 is fed to each ROM 121 and 122 as address information. Thus, the factor data in the ROM 121 corresponding to the instructed address is fed to the programmable frequency multiplier 30, and the factor data in the ROM 122 corresponding to the instructed address is fed to the programmable frequency divider 31.

The programmable frequency multiplier 30 is a well known frequency synthesizer which comprises a programmable counter 30a and a phase lock loop 30b, and which multiplies a frequency of the input spindle pulse $N_{SP}$ from the pulse pickup 22 by a factor M corresponding to the variable factor data fed from the ROM 121.

The programmable frequency divider 31 is a well known programmable counter which divides the frequency of the input signal from the multiplier 30 by a factor N corresponding to the variable factor data fed from the ROM 122.

The operation of the package diameter detecting means will be explained with reference to Fig. 9.

Before a yarn is threaded through a yarn tension sensing means, a stopped winding spindle will have reached a predetermined rotational speed and will be rotating at this speed. The predetermined rotational speed of the winding spindle is determined by the spindle preset pulse $N_0$ in such a way that the frequency $f_1$ of the spindle pulse $N_{sp}$ is equal to the frequency $f_0$ of the spindle preset pulse $N_0$.

The counter 113 counts the number of the spindle preset pulses $N_0$, whereas the counter 114 counts the number of the spindle pulses $N_{sp}$. The counter 115 counts the number of the spindle preset pulses $N_0$ from the time when the counter 113 counts 256 spindle preset pulses, to the time when the counter 114 counts 257 spindle pulses.

Therefore, at the beginning of the winding, the counter 115 does not count any pulses because there is no difference between the frequencies $f_0$ and $f_1$.

Some time after the start of the winding, the yarn will have been wound on a bobbin tube so that a yarn layer having a certain thickness will have been formed. Since the diameter of the package on the bobbin tube is gradually increased, the rotational speed of the winding spindle is gradually decreased in accordance with the instructions from the yarn tension sensing means. As a result the frequency $f_1$ of the spindle pulse $N_{sp}$ is decreased. In such a case the counter 115 counts the number of the spindle preset pulses corresponding to the difference between the frequencies $f_0$ and $f_1$.

The contents in the counter 115 to be applied to the latch circuit 117 corresponds to the thickness of the yarn package. That is, the thickness of the yarn package corresponds to the number of the spindle preset pulses $N_0$ which are counted by the counter 115 from the time when the counter 113 counts 256 spindle preset pulses $N_0$ to the time when the counter 114 counts 256 spindle pulses $N_{sp}$. The reason, why the thickness of the yarn package corresponds to the number of the spindle preset pulses $N_0$ counted by the counter 115, is as follows.

v:      yarn winding speed (constant)

$R_0$:      the rotational speed of the winding spindle at the time of starting the winding

$R_{sp}$:      the rotational speed of the winding spindle during the winding

$r_0$:      radius of the empty bobbin tube

$r_1$:      radius of a yarn package during the winding

$\Delta r$:      thickness of a yarn package.

$$v = 2\pi r_0 R_0 = 2\pi r R_{sp}$$

$$r_0 = \frac{v}{2\pi R_0}, \qquad r = \frac{v}{2\pi R_{sp}}$$

$$\Delta r = r - r_0 = \frac{v}{2\pi}\left(\frac{1}{R_{sp}} - \frac{1}{R_0}\right)$$

$$R_{sp} \propto f_1, \quad R_0 \propto f_0$$

$$\therefore \Delta r \propto \frac{1}{f_1} - \frac{1}{f_0}$$

The value of

$$\left(\frac{1}{f_1} - \frac{1}{f_0}\right)$$

is correlative to the number of the spindle preset pulses counted by the counter 115.

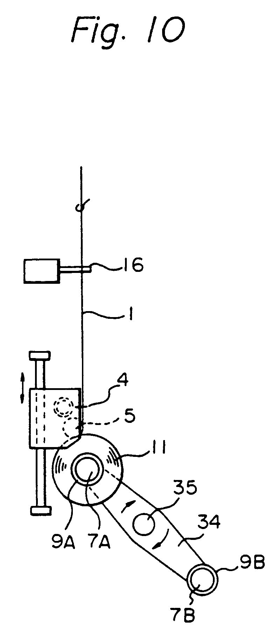

As illustrated in Figs. 10 to 12, the present invention can be applied to a revolving type winder.

Generally, in a conventional system for winding a yarn at a constant wind ratio, traverse means is mechanically driven via a winding spindle. However, a revolving type winder has two or more winding spindles and one traverse means, and it is very difficult to transmit the driving power from a winding spindle to traverse means because after each completion of forming a yarn package, a winding spindle which has been faced to the traverse means is exchanged for another winding spindle regarding their positions. Consequently, according to a conventional revolving type winder, winding a yarn at a constant wind ratio cannot be carried out.

On the contrary, according to the present invention, rotational speeds of a winding spindle and traverse means are controlled electrically and therefore a winding system with a constant wind ratio can be applied to a revolving type winder.

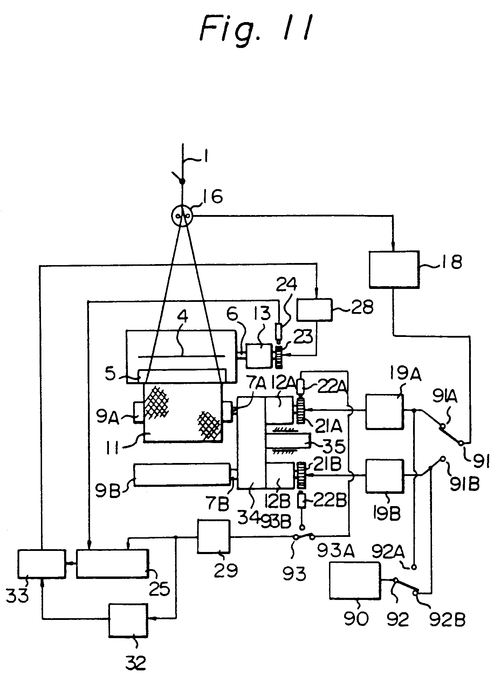

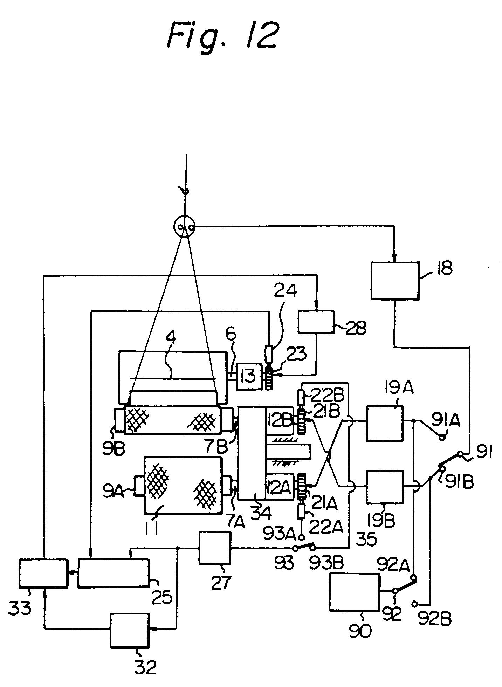

Fig. 10 is a schematic side elevation view of a revolving type winder. Fig. 11 is a schematic front view showing an embodiment of a revolving type winder of the present invention. Fig. 12 is a schematic front view showing the same embodiment illustrated in Fig. 11, but showing the state thereof after exchanging bobbins.

In Figs. 10 and 11, a revolving arm 34 can be rotated about an axis 35. The revolving arm 34 supports at both ends thereof two winding spindles 7A and 7B, which spindles 7A, 7B are directly connected with first electrical motors 12A and 12B respectively. In normal operation, a yarn 1 is wound on a bobbin tube mounted on one of said two winding spindles 7A and 7B after passing through a yarn tension sensing means 16 and traverse element 4.

Two rotary discs 21A and 21 B are respectively attached to the winding spindles 7A and 7B. Two pulse pickups 22A and 22B are respectively disposed against the corresponding rotary discs 21A and 21B having notches or projections and supported by the revolving arm 34. When the winding spindles 7A and 7B rotate, the pulse pickups 22A and 22B generate electrical signals corresponding to the rotational speeds of the winding spindles.

A traverse element driving shaft 6 is also directly connected with a second electrical motor 13 and moves a traverse element 4 for imparting the traverse motion to the yarn 1 to be wound. The traverse element driving shaft 6 is provided with a rotary disc 23 having notches or projections, and a pulse pickup 24 is disposed against the rotary disc 23 in order to generate electrical signal corresponding to the rotational speed of the traverse element driving shaft 6.

In the embodiment illustrated in Figs. 10 to 12, members designated by the same or similar reference numerals as appearing in the embodiments illustrated in Figs. 1 to 5, respectively correspond to the members of the embodiment in Figs. 1 to 5. Therefore such members will not be explained in detail here.

When a yarn 1 is passed through a yarn tension sensing means 16, the means 16 generates an electrical signal corresponding to the tension in the yarn, and out-put signal from the means 16 is applied to a comparing means 18 wherein the input signal is compared with a setting electrical signal and an error compensation signal is generated in accordance with the difference between both said signals. The output signal from the comparing means 18 is selectively fed into a speed changing means 19A or 19B via a switch 91.

As shown in Fig. 11, when a yarn 1 is wound on a bobbin tube 9A mounted on a winding spindle 7A, the output error compensation signal from the comparing means 18 is applied to the speed changing means 19A via contact 91A of the switch 91. The speed changing means controls the first motor 12A for driving the winding spindle 7A in such a way that the error compensation signal will not be generated from the comparing means 18, whereby the winding speed can be kept at a substantial constant speed.

If the first motors 12A and 12B are induction motors, preferably the speed changing means 19A and 19B are invertors which respectively control the frequency of the drive current of the induction motors 12A and 12B in accordance with the error compensation signal from the comparing means 18.

If the first motors 12A and 12B are D.C. motors, the speed changing means 19A and 19B are respectively D.C. motor controllers which control the field current of the D.C. motors in accordance with the error signal compensation from the comparing means 18.

While the winding spindle 7A rotates together with a rotary disc 21A, the pulse pickup 22A generates an electrical signal corresponding to the rotational speed of the winding spindle 7A. The output signal from the pulse pickup 22A is applied via contact 93A of a switch 93 to a frequency multiplying and dividing unit 29. The output signal from the multiplying and dividing unit 29 is applied on one hand to a comparing means 25 and on the other hand to a frequency/voltage convertor 32. In the comparing means 25, the input signal from the multiplying and dividing unit 29 is compared with another input signal from the pickup 24 which input signal is generated corresponding to the rotational speed of the traverse element driving shaft 6.

The output signal from the comparing means 25 is applied to an adder 33, whereas the output signal from the frequency/voltage converter 32 is also applied to the adder 33 where said two signals are combined. The output signal from the adder 33 is applied to a speed changing means 28. In accordance with the input signal from the adder 33, the speed changing means 28 controls the second motor in such a way that an output signal will not be generated by the comparing means 25. The way for controlling the wind ratio according to the embodiment illustrated in Figs. 10 to 12 is substantially the same as that of the embodiments illustrated in Figs. 1 to 5, and therefore we will not explain the way in detail here.

When a package 11 on the bobbin tube 9A becomes a full package, bobbin-exchanging takes place as follows.

EP 0 064 579 B2

Firstly, a controller 90 is actuated, which controller selectively controls the two speed changing means 19A and 19B in order to provisionally drive a first motor for a winding spindle having an empty bobbin tube. As illustrated in Fig. 11, the controller 90 is connected to the speed changing means 19B via contact 92B of the switch 92, so that the first motor 12B starts to rotate. After a certain time necessary to bring to a determined speed the drive of the winding spindle 7B, the revolving arm 34 is rotated about the axis 35, so that the full package on the winding spindle 7A is exchanged for the empty bobbin 9B on the winding spindle 7B, their respective positions are as illustrated in Fig. 12.

As soon as the completion of the bobbin-exchange, the contact 91A of the switch 91 is opened, whereas the contact 91B of the switch 91 is closed. Thus, the first motor 12B is driven normally, but the other first motor 12A is stopped. Now, the yarn 1 is wound on the bobbin tube 9B at a constant wind ratio. Regarding the controller 90, after the bobbin-exchange, the contact 92B is opened and contact 92A is closed, so that the speed changing is ready for the next bobbin-exchange.

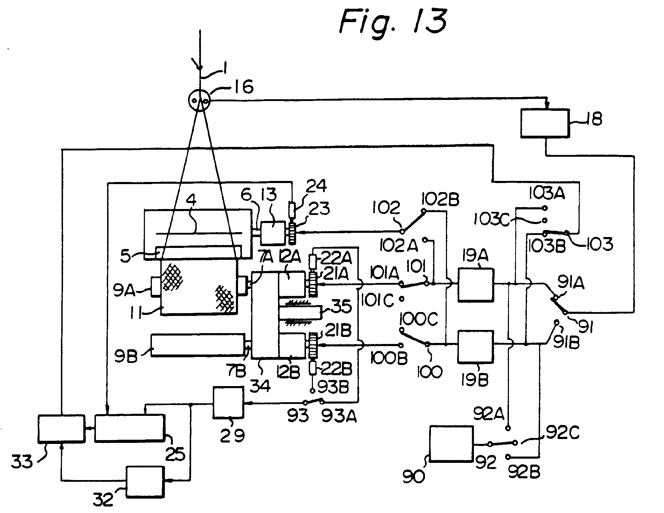

Figs. 13 to 15 illustrate another embodiment of the present invention, which is also applied to a revolving type winder.

This embodiment is almost similar to the embodiment as illustrated in Figs. 11 and 12, except for the following point. In this embodiment, there is not provided a speed changing means exclusively used for driving a traverse element driving shaft, but only a two speed changing means 19A and 19B are provided.

A comparing means 18 is selectively connected to one of the speed changing means 19A or 19B via a switch 91 with two contacts 91A and 91B. The output signal from the speed changing means 19A is selectively applied to the first motor 12A and the second motor 13 for the traverse means, via the switch 101 or the switch 102. The output signal from the speed changing means 19B is selectively applied to the first motor 12B and the second motor 13 via switch 100 or switch 102. The controller 90 is selectively connected with the two speed changing means 19A and 19B via a switch 92. Further an output signal from the adder 33 is selectively fed to the two speed changing means 19A and 19B via a switch 103.

As illustrated in Fig. 13, when a yarn is wound on a bobbin tube 9A mounted on a winding spindle 7A, an electrical signal produced by a yarn tension sensing means 16 is fed to a comparing means 18, wherein said signal is compared with a predetermined setting signal and an error compensation signal is generated in accordance with the difference between the input signal from the sensing means and the setting signal. The output signal from the comparing means 18 is fed to the speed changing means 19A via the contact 91A of the switch 91 and an output signal from the speed changing means 19A is fed to the first motor 12A via contact 101A of the switch 101. Consequently the first motor 12A is driven in such a manner that a tension in the yarn to be wound is substantially kept constant. On the other hand, the first motor 12B is stopped.

While the winding spindle 7A rotates together with a rotary disc 21A, a pulse pickup 22A generates an electrical signal corresponding to the rotational speed of the winding spindle 7A. The output signal from the pulse pickup 22A is fed via contact 93A of a switch 93 to a frequency multiplying and dividing unit 29. The output signal from the unit 29 is simultaneously fed to a comparing means 25 and to a frequency/voltage converter 32, and the output signal from the comparing means 25 and the output signal from the F/V converter 32 are fed to an adder 33 in the same manner as explained regarding Fig. 5. The output signal from the adder 33 is fed to the speed changing means 19B via contact 103B of the switch 103. At this time the speed changing means 19B is connected to the second motor 13 via the contact 102B of the switch 102. Consequently, the rotational speed of the traverse element driving shaft 6 is driven in such a manner that the output signal from the comparing means 25 will not be generated, whereby the wind ratio is kept constant. Regarding a controller 90, the switch 92 is selected at a position 92C free from the contacts 92A and 92B.

When a package 11 on the bobbin tube 9A becomes a full package, bobbin-exchanging takes place as follows.

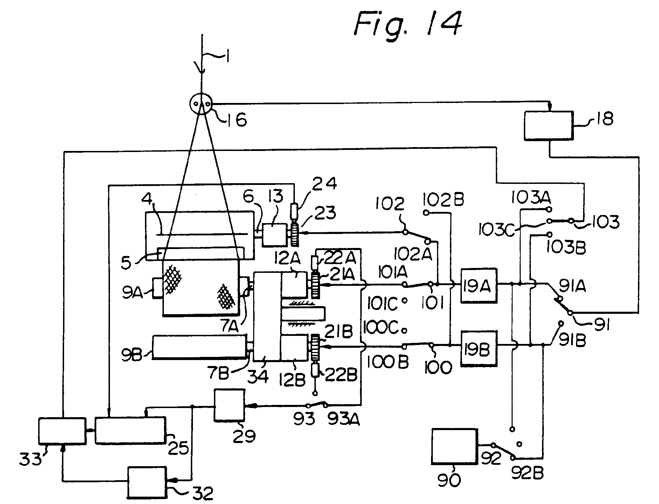

As illustrated in Fig. 14, in order to accelerate the winding spindle 7B, which has been stopped, up to a predetermined rotational speed prior to the normal winding operation, the contact 102B of the switch 102 is opened but the contact 102A is closed, and the switch 103 is selected at a position 103C free from the contacts 103A and 103B. As a result, the speed changing means 19B is ready for accelerating the winding spindle 7B with an empty bobbin tube, and the second motor 13 is controlled by the speed changing means 19A which is also controlling the first motor 12A at this time so that the wind ratio may be changed under these conditions. Preferably, in order to prevent the wind ratio from changing at this time there is provided a regulating means such as a timing belt or a pulley or the like in the driving system of the traverse means.

Then, the contact 92B of the switch 92 is selected and the contact 100B of the switch 100 is selected, so that the speed changing means 19B is connected with the controller 90 and with the first motor 12B. As a result the first motor 12B is driven up to a predetermined rotational speed. After the rotational speed of the winding spindle 7B has reached a given speed, the revolving arm 34 is revolved and the two winding spindles 7A and 7B are exchanged.

10

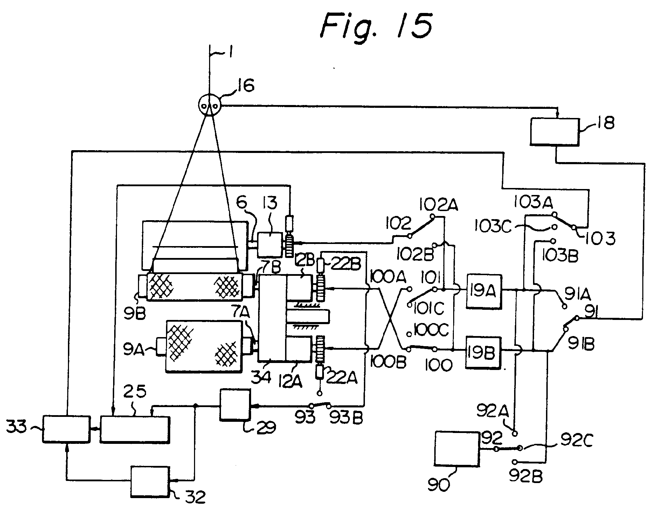

Fig. 15 illustrates a state of the winder after the bobbin exchange has taken place and the normal winding operation is carried out on the winding spindle 7B. As shown in Fig. 15, the contact 91B, the contact 100B, the contact 102A and the contact 103A are respectively selected. Therefore the first motor 12B is controlled by the speed changing means 19B, whereas the second motor 13 is controlled by the speed changing means 19A. The speed changing means 19B is controlled by the output signal from the comparing means 18 and the other speed changing means 19A is controlled by the output signal from the adder 33, so that a yarn is wound on the winding spindle 7B at a constant wind ratio.

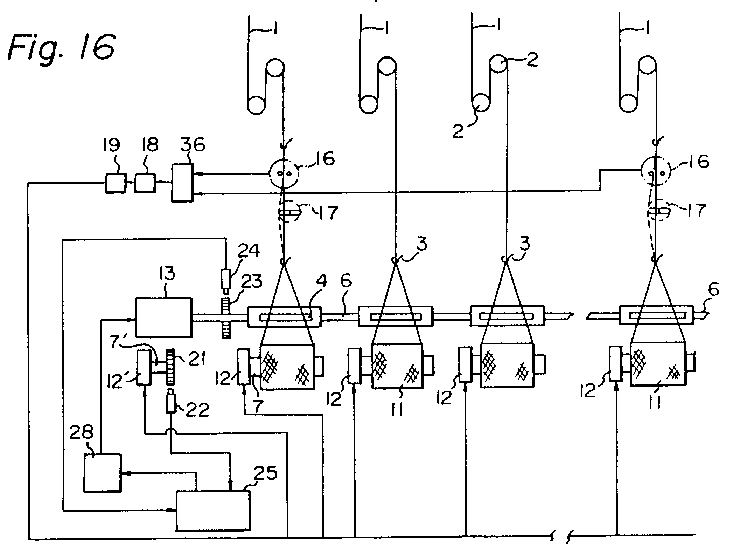

Fig. 16 illustrates an embodiment of the present invention, wherein the yarn winding apparatus comprises a plurality of winding devices.

According to this embodiment, a plurality of winding spindles 7 are provided and each winding spindle has a first motor 12. A plurality of traverse elements 4 are disposed corresponding to the winding spindles 7 and all the traverse elements are driven by a common driving shaft 6. The common driving shaft 6 is driven by a second motor 13. In order to detect the rotational speed of a winding spindle, the same motor 12' as the first motor 12 is provided and a shaft 7' having a rotary disc 21 is driven by the motor 12'. A pulse pickup 22 is disposed against the rotary disc 21. In this embodiment, a synchronous motor is preferably used as the motors 12 and 12'.

The embodiment illustrated in Fig. 16 is similar to the embodiments explained regarding Figs. 1 to 9, except for the following points.

That is, yarn tension sensing means 16 are provided for some of winding devices, for example if there are 200 winding devices, 10 yarn tension sensing means are provided. The output signals from each yarn tension sensing means 16 are fed to means for producing a tension representing signal 36. One embodiment of the tension representing signal producing means 36 is means for averaging output signals fed from the plurality of yarn tension sensing means 16 and for applying averaged output signal therefrom to a comparing means 18.

Another embodiment of the tension representing signal producing means 36 is means for selectively applying one of the output signals from a plurality of yarn tension sensing means 16 to the comparing means 18.

The output signal from the tension representing signal producing means 36 is fed to the comparing means in which the signal is compared with a predetermined signal. The output error compensation signal from the comparing means 18 is fed to a speed changing means. The output signal from the speed changing means 19 is simultaneously fed to the motor 12' and all of the winding spindles of the first motor 12. Consequently, the rotational speeds of all the winding spindles is simultaneously controlled.

In this embodiment of Fig. 16, the manner of controlling the wind ratio is similar to that in the embodiments explained before in this specification.

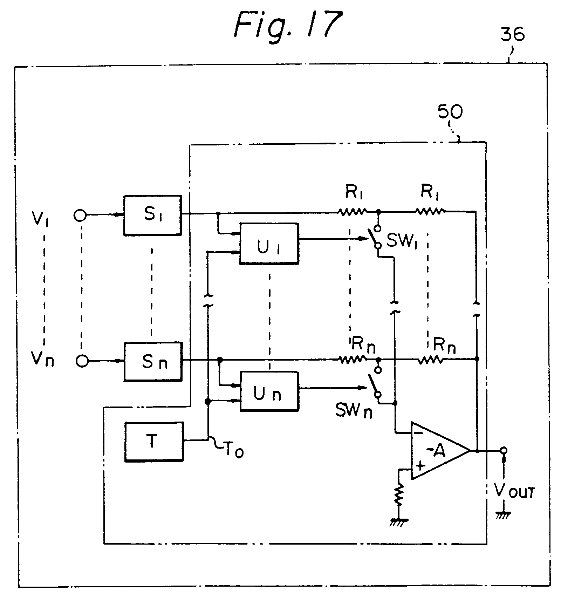

Fig. 17 illustrates an embodiment of the means 36 for producing a tension representing signal. In this embodiment, the means 36 comprises rectifying and smoothing circuits $S_1$ to $S_n$ which convert alternating signals from the tension sensing means 16 such as disclosed in U.S. Patent No. 3,931,938 and U.K. Patent Publication 2015589A into D.C. voltage signals, and an averaging circuit 50 for averaging the D.C. voltage signals from the rectifying and smoothing circuits $S_1$ to $S_n$ and for producing an averaged voltage as a tension representing signal. The averaging circuit 50 includes an adder circuit constructed so that its amplifying factor can be changed in accordance with the number of absent D.C. voltage signals. In order to detect this absence, the averaging circuit 50 further includes comparators $U_1$ to $U_n$ which compare the D.C. voltage signals with a predetermined reference voltage from a reference signal circuit T, respectively. If the absence of the D.C. voltage signal, which absence may be caused by a yarn breakage, is detected, corresponding switching means $SW_1$ to $SW_n$ in the averaging circuit 50 are turned off to effect and increase of the amplifying factor or the adder circuit, whereby the circuit 50 can always produce average D.C. voltage signals from the rectifying and smoothing circuits in accordance with the number of existing D.C. voltage signals. Consequently, irrespective of yarn breakage, the means 36 illustrated in Fig. 17 can produce an appropriate averaged signal as a tension representing signal.

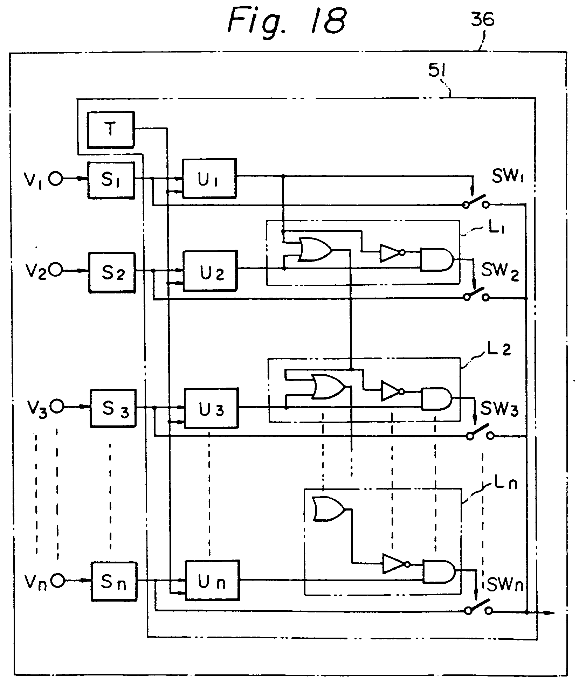

Fig. 18 illustrates another embodiment of the means 36 for producing a tension representing signal. In embodiment, the means 36 comprises rectifying and smoothing circuits $S_1$ to $S_n$ which convert alternating signals from the tension sensing means 16 into D.C. voltage signals, and a selection circuit 51 for selecting only one of the D.C. voltage signals from the rectifying and smoothing circuits $S_1$ to $S_n$ as a tension representing signal. The selection circuit 51 includes comparators $U_1$ to $U_n$ for comparing the D.C. voltage signals with a predetermined reference voltage from a reference signal circuit T, respectively, so as to detect the absence of D.C. voltage signals. The selection circuit 51 further includes switching means $SW_1$ to $SW_n$ and logical circuits $L_1$ to $L_n$ for turning on only one of the switching means $SW_1$ to $SW_n$ in response to the detected result from the comparators $U_1$ to $U_n$. If the comparator $U_1$ doesn't detect the absence of the D.C. voltage signal, only the switching means $SW_1$ turns on and the D.C. voltage signal from the rectifying and smoothing circuit $S_1$ is output as a

EP 0 064 579 B2

tension representing signal. Contrary to this, if the comparator $U_1$ detects the absence of the D.C. voltage signal from the rectifying and smoothing circuit $S_1$, the switching means $SW_1$ turns off and only the switching means $SW_2$ turns on to pass the D.C. voltage signal from the rectifying and smoothing circuit $S_2$ as a tension representing signal.

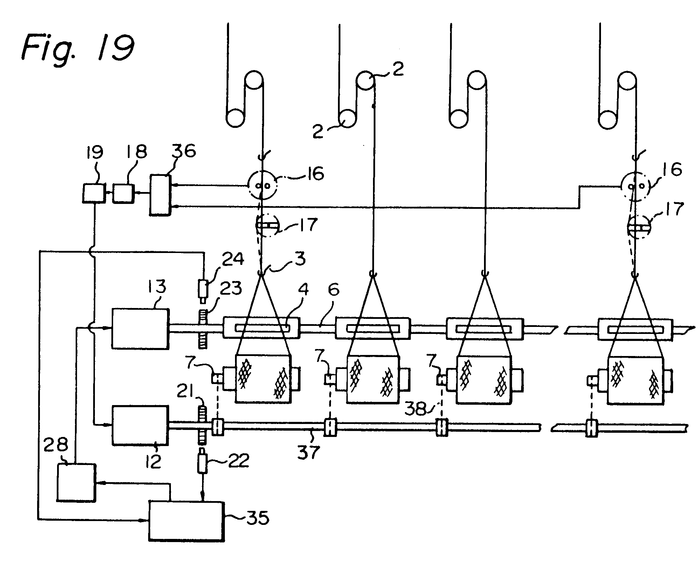

Fig. 19 illustrates another embodiment of the present invention. This embodiment is very similar to the embodiment of Fig. 16, except for the following points.

That is, a plurality of winding spindles 7 are simultaneously driven by a common winding spindle driving shaft 37 via gear means 38. The common winding spindle driving shaft is driven by a first motor 12 and is provided with a rotary disc 21. A pulse pickup 22 is disposed against the rotary disc 21.

According to this embodiment of Fig. 19, the wind ratio is controlled similar to the manner which was explained before.

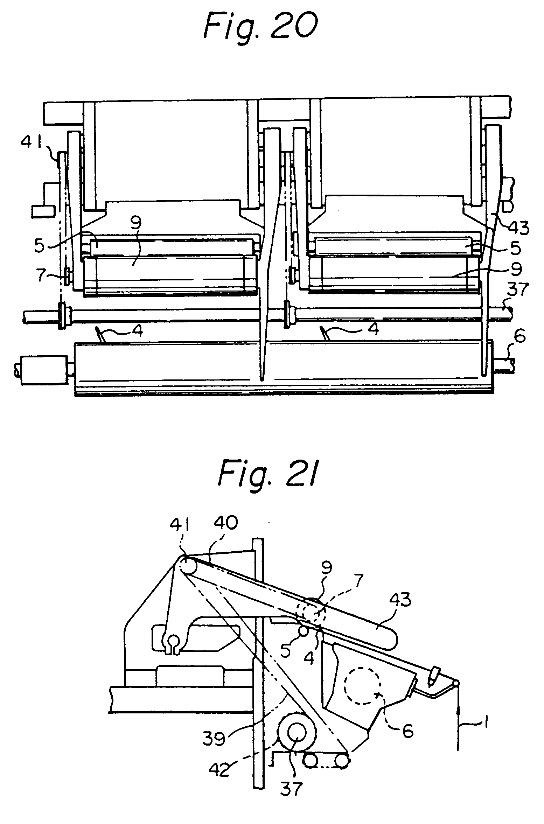

Figs. 20 and 21 illustrate an embodiment of a winding device which is similar to that of Fig. 19.

Fig. 20 is a schematic plan view of the winding device and Fig. 21 is a schematic side view thereof. According to this winding device a supplied yarn 1 is passed through a yarn guide and through a traverse element 4 which imparts to the yarn the traverse motion, and then is wound on a bobbin tube 9 supported on a winding spindle 7. The bobbin tube 9 or package is contacted with a touch roller 5 under appropriate contacting pressure. The traverse element 4 is driven by means of a traverse element driving shaft 6. On the other hand, the winding spindle 7 is driven via toothed timing belts 39 and 40, a pulley 41 and a timing pulley 42. The timing pulley 42 is mounted on a common winding spindle driving shaft 37. The pulley 41 is supported on an axis, about which axis a cradle 43 is swingable.

A yarn winding apparatus as illustrated in Figs. 16, 19, 20 and 21 is advantageously utilized for simultaneously winding a plurality of yarns as a draw winder or a rewinder. In such a winding apparatus, tension in each yarn is substantially the same. Even if the tension in a yarn is different from that of others, the yarn tension controls itself automatically and makes the tension in all the yarns uniform. The reason why this automatically takes place is as follows. When the tension in any one yarn is higher than that of other yarns, this yarn with the higher tension tends to be wound more tightly on a package than others, whereby the rate of increase of the diameter of that tightly wound package is less than that of the others. As a result the winding speed, which is correlated to the diameter of the package of the yarn in question will be decreased, and as the tension in the yarn will be lowered. On the other hand, when the tension in any one yarn is less than that of others, that particular yarn will be wound loosely and the diameter of that package of yarn will increase more quickly than that of others, so that the winding speed is increased and the tension in that particular yarn will also be increased and will become the same as that of the other yarns.

## Claims

1. A yarn winding apparatus comprising a winding device for winding a yarn (1) to form a yarn package (11) on a bobbin (9) which apparatus includes
   - a first motor (12) driving a winding spindle (7) supporting the bobbin (9),
   - a second motor (13) for driving a traverse element driving shaft (6) driving a traverse element (4) for imparting a traverse motion to the yarn (1),
   - a spindle speed detecting means (21, 22) for generating a first electrical signal corresponding to the rotational speed of the winding spindle (7),
   - a traverse element driving shaft speed detecting means (23, 24) for generating a second electrical signal corresponding to the rotational speed of the traverse element driving shaft (6),
   - a first speed controlling means (14) for controlling the first motor (12) so as to keep the yarn winding speed substantially constant from the beginning to the completion of the winding operation, and
   - a second speed controlling means (20) which, for controlling the speed of the second motor (13), comprises
     a means (25) comparing said first and second electrical signals and producing a third electrical signal corresponding to the difference between said first and second electrical signals, and
     a speed changing means (28) which is actuated by said third electrical signal for controlling the rotational speed of the second motor (13) so as to stepwise change the wind ratio, i.e. the ratio of the rotational speed of the winding spindle (7) to the ratational speed of the traverse element driving shaft (6), a plurality of times to predetermined values during the winding, each of the winding ratios being substantially kept for a certain duration,
     characterized in that for the winding of an elastic yarn (1) said second speed controlling means (20) comprises a frequency multiplying and dividing unit (29) including a frequency multiplier (30) for multiplying

12

serial first electrical pulse signal and a frequency divider (31) therein in order to change the wind ratio a plurality of times during a winding operation, each of said plurality of wind ratios being accurately determined to four decimal places.

2. An apparatus according to claim 1,
characterized in that said multiplying and dividing unit (29) can be actuated in accordance with a predetermined control program (120).

3. An apparatus according to claim 1,
characterized in that the means for controlling the first motor (12) is an inverter (19a, 19b).

4. An apparatus according to claim 1,
characterized in that said apparatus includes a pair of winding spindles (7A, 7B) for mounting respective bobbins (9A, 9B), said spindles being able to alternately positioned in a winding position of the winding device.


**Patentansprüche**

1. Garnwickelvorrichtung mit einer Wickelvorrichtung zum Aufwickeln von Garn zur Bildung eines Garnpaketes (11 ) auf einer Spule (9), wobei die Vorrichtung einschließt:
- einen ersten Motor (12) für den Antrieb einer Wickelspindel (7), welche die Spule (9) trägt,
- einen zweiten Motor (13) für den Antrieb einer Antriebswelle (8) eines Querlaufelementes (Traversierelementes), welche das Querlaufelement (4) antreibt, um dem Garn (1) eine Querbewegung mitzugeben,
- eine Erfassungseinrichtung (21, 22) für die Spindelgeschwindigkeit, um ein erstes elektrisches Signal zu erzeugen, welches der Drehgeschwindigkeit der Wickelspindel (7) entspricht,
- eine Erfassungseinrichtung (23, 24) für die Geschwindigkeit der Antriebswelle des Querlaufelementes, um ein zweites elektrisches Signal zu erzeugen, welches der Drehgeschwindigkeit der Antriebswelle (6) des Querlaufelementes entspricht,
- eine erste Geschwindigkeitssteuereinrichtung (14), um den ersten Motor so zu steuern, daß er die Garnwickelgeschwindigkeit im wesentlichen vom Beginn bis zur Vervollständigung des Wickelvorganges konstant hält, und
- eine zweite Geschwindigkeitssteuereinrichtung (20), welche für die Regelung der Geschwindigkeit des zweiten Motors (13) aufweist:
    eine Einrichtung (25), welche die ersten und zweiten elektrischen Signale vergleicht und ein drittes elektrisches Signal erzeugt, welches der Differenz zwischen den ersten und zweiten elektrischen Signalen entspricht, und
    eine Geschwindigkeitsänderungseinrichtung (28), die durch das dritte elektrische Signal zum Regeln der Drehgeschwindigkeit des zweiten Motors (13) gesteuert wird, um so schrittweise das Wickelverhältnis zu ändern, d. h. das Verhältnis der Drehgeschwindigkeit der Wickelspindel (7) zu der Drehgeschwindigkeit der Antriebswelle (6) für das Querlaufelement, und zwar mehrere Male auf vorbestimmte Werte während des Wickelns, wobei jedes dieser Wickelverhältnisse während einer gewissen Zeitdauer im wesentlichen aufrecht erhalten wird,
**dadurch gekennzeichnet**, daß für das Aufwickeln eines elastischen Garnes (1) die zweite Geschwindigkeitsregeleinrichtung (20) eine Frequenzmultiplizier- und Teilungseinheit (29) aufweist, einschließlich eines Frequenzmultiplizierers (30) zum Multiplizieren des ersten elektrischen Impulssignals und eines Frequenzteilers (31) darin, um das Wickelverhältnis mehrere Male während eines Wickelvorganges zu ändern, wobei jedes der Mehrzahl von Wickelverhältnissen bis auf vier Dezimalstellen genau bestimmt wird.

2. Vorrichtung nach Anspruch 1, **dadurch gekennzeichnet,** daß die Multiplizier- und Teilungseinheit (29) entsprechend einem vorbestimmten Steuerprogramm (20) betätigt werden kann.

3. Vorrichtung nach Anspruch 1, **dadurch gekennzeichnet**, daß die Einrichtung zum Regeln des ersten Motors (12) ein Inverter (19, 19b) ist.

4. Vorrichtung nach Anspruch 1, **dadurch gekennzeichnet**, daß die Vorrichtung ein Paar von Wickelspindeln (7A, 7B) aufweist für die Installation entsprechender Spulen (9A, 9B), wobei die Spindeln in der Lage sind, abwechselnd in einer Wickelposition der Wickelvorrichtung angeordnet zu werden.

EP 0 064 579 B2

**Revendications**

1. Bobinoir de filé, comprenant un dispositif de bobinage pour enrouler un filé (1) afin de former une pelote (11) sur une bobine (9), bobinoir qui comprend :
   - un premier moteur (12) entraînant une broche de bobinage (7) supportant la bobine (9);
   - un second moteur (13) pour entraîner un arbre (6) d'entraînement d'élément animé d'un mouvement de va-et-vient, entraînant un élément animé d'un mouvement de va-et-vient (4) pour conférer un mouvement de va-et-vient au filé (1);
   - un moyen de détection de vitesse de broche (21, 22) pour produire un premier signal électrique correspondant à la vitesse de rotation de la broche de bobinage (7),
   - un moyen (23, 24) de détection de la vitesse de l'arbre d'entraînement de l'élément animé d'un mouvement de va-et-vient pour produire un second signal électrique correspondant à la vitesse de rotation de l'arbre (6) d'entraînement de l'élément animé d'un mouvement de va-et-vient;
   - un premier moyen de commande de vitesse (14) pour commander le premier moteur (12) de façon à maintenir sensiblement constante la vitesse de bobinage du filé entre le début et la fin de l'opération de bobinage; et
   - un second moyen de commande de vitesse (20) qui, pour commander la vitesse du second moteur (13), comporte :
   - un moyen (25) comparant lesdits premier et second signaux électriques et produisant un troisième signal électrique correspondant à la différence entre lesdits premier et second signaux électriques; et
   - un moyen de changement de vitesse (28) qui est actionné par ledit troisième signal électrique pour commander la vitesse de rotation du second moteur (13) de façon à modifier pas par pas le rapport de bobinage, c'est-à-dire le rapport entre la vitesse de rotation de la broche de bobinage (7) et la vitesse de rotation de l'arbre (6) d'entraînement de l'élément animé d'un mouvement de va-et-vient, une multitude de fois à des valeurs prédéterminées pendant le bobinage, chacun des rapports de bobinage étant sensiblement maintenu pendant une certaine durée;
   caractérisé en ce que pour l'enroulement d'un filé élastique (1), ledit second moyen de commande de vitesse (20) comprend une unité de multiplication et de division de fréquence (29) comportant un multiplicateur de fréquence (30) pour multiplier ledit premier signal impulsionnel électrique et un diviseur de fréquence (31) dans le but de modifier le rapport de bobinage une multitude de fois pendant une opération de bobinage, chaque rapport de ladite multitude de rapports de bobinage étant déterminé avec précision à 4 décimales.

2. Bobinoir selon la revendication 1, caractérisé en ce que ladite unité de multiplication et de division (29) peut être actionnée en conformité avec un programme de commande prédéterminé (120).

3. Bobinoir selon la revendication 1, caractérisé en ce que le moyen pour commander le premier moteur (2) est un onduleur (19a, 19b).

4. Bobinoir selon la revendication 1, caractérisé en ce que ledit bobinoir comporte une paire de broches de bobinage (7A, 7B) pour monter respectivement des bobines (9A, 9B), lesdits broches pouvant être placées en alternance pour une opération d'enroulement du dispositif de bobinage.

14

Fig. 2

Fig. 1

EP 0 064 579 B2

Fig. 3

Fig. 4

# Fig. 5

Fig. 6

(a)

(b)

(c)

⟶ TIME

Fig. 7

A HALF VALUE OF CROSS ANGLE OF YARN (DEGREE)

10.7   6.8   b   3.5

4.9

b

a

DIAMETER OF YARN PACKAGE (mm)

*Fig. 8*

Fig. 9

Fig. 10

# Fig. 11

# Fig. 12

# Fig. 13

# Fig. 14

Fig. 15

Fig. 16

# Fig. 17

Fig. 18

Fig. 19

# Fig. 20

# Fig. 21